# EUROPEAN PATENT APPLICATION

(11) **EP 3 495 397 A1**
(43) Date of publication of application: **12.06.2019**
(21) Application number: 17836644.9
(22) Date of filing: 27.06.2017
(51) Int. Cl.: C08F 20/30, C08F 2/44, C08F 2/46, C09D 4/02, C09D 7/40

(54) **(METH)ACRYLIC COMPOSITION, COATING MATERIAL CONTAINING SAME AND CURED BODY**

(30) Priority: 03.08.2016 JP 2016152574
(71) Applicant: Mitsubishi Gas Chemical Company, Inc., Tokyo 100-8324 (JP)
(72) Inventor: KOUNO Kazuki, Hiratsuka-shi Kanagawa 254-0016 (JP)
(74) Representative: Müller-Boré & Partner Patentanwälte PartG mbB
(86) International application number: PCT/JP2017/023514
(87) International publication number: WO 2018/025537

(57) **Abstract**

The present invention provides: a composition which exhibits low viscosity, while having high refractive index and good dryability when cured, and which is able to be suppressed in precipitation of crystals for a long period of time in cases where the composition is stored at low temperatures; and a coating material which contains this composition. According to one embodiment of the present invention, the above-described problem is able to be solved by a composition which contains (A) 60-95 parts by mass of a (meth)acrylate represented by general formula (1): 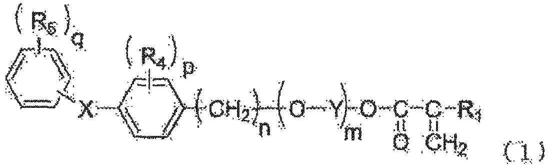 and (B) 5-40 parts by mass of an aromatic alcohol represented by general formula (2):

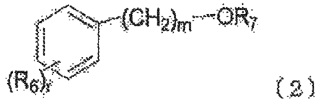

## Description

### TECHNICAL FIELD

The present invention relates to a (meth)acrylic composition and a coating material containing the composition. The present invention also relates to a cured body of the composition.

### BACKGROUND ART

In recent years, resin materials are widely used in optical components, such as optic overcoating agents, hard coating agents, antireflection films, spectacle lenses, optical fibers, optical waveguides, and holograms, because of their excellent workability and productivity. Further, in the field of optical components, the tendency of miniaturization and thinning has increased, and materials having high refractive indices are accordingly required. Against such requirements, coating materials including resin compositions having high refractive indices when cured are widely used. However, such coating materials generally have relatively high viscosities, and this characteristic causes a difficulty in thin coating in some cases. Accordingly, it has been proposed a composition having a low viscosity improved in this point.

For example, Patent Literature 1 proposes a composition having a high refractive index and a low viscosity by mixing o-phenylbenzyl acrylate (OPBA, or 2-phenylbenzyl acrylate) and p-phenylbenzyl acrylate (PPBA, or 4-phenylbenzyl acrylate), isomers of phenylbenzyl acrylate, at a specific ratio. Patent Literature 2 describes that a composition having a high refractive index and a low viscosity can be prepared by mixing phenylbenzyl acrylate with a difunctional (meth)acrylate or diphenyl derivative.

Patent Literature 3 proposes a radical polymerizable composition containing a phenylbenzyl (meth)acrylate (A), an epoxy (meth)acrylate (X) having an aromatic ring in the molecular structure, and a radical polymerization initiator (Y) as essential components. Although the composition is solvent free, it has a low viscosity suitable for coating, and the cured material thereof has a high refractive index.

Patent Literature 4 provides a resin composition suitable as a sealing material for an organic EL element and a cured material having excellent curing properties and low visible light transmittance, cure shrinkage, and water vapor permeability, the resin composition containing a (meth)acrylate compound having an aromatic hydrocarbon skeleton, a cyclic (meth)acrylate compound having a specific structure, and a polymerization initiator (C).

### PRIOR ART DOCUMENTS

### Patent documents

Patent Literature 1: Japanese Patent Laid-Open No. 2012-82387
Patent Literature 2: Japanese Patent Laid-Open No. 2012-82386
Patent Literature 3: Japanese Patent Laid-Open No. 2013-18982
Patent Literature 4: Japanese Patent Laid-Open No. 2014-193970

### SUMMARY OF INVENTION

### TECHNICAL PROBLEM

As described above, a variety of compositions having high refractive indices and low viscosities have been proposed. However, such compositions basically need to be stored at room temperature or lower (specifically, 0°C or less) for preventing reactions, such as polymerization, from occurring during storage. However, storage at low temperature causes crystal precipitation in the composition and is therefore difficult. Although Patent Literatures 1 and 2 also investigated this point, the storage conditions in the investigation were at 0°C for 2 days, a very short period of time. Consequently, a composition that can prevent crystal precipitation for a longer period of time and has a low viscosity and, when cured, has a high refractive index and good drying properties has been required.

Accordingly, it is an object of the present invention to provide a composition that has a low viscosity and, when cured, has a high refractive index and good drying properties and can be stored at low temperature without causing crystal precipitation for a long period of time and to provide a coating material containing the composition. It is also an object of the present invention to provide a cured body of the composition.

### SOLUTION TO PROBLEM

The present inventors have diligently studied to solve the above-mentioned problems and, as a result, have found that the problems can be solved by mixing a (meth)acrylate having a specific structure and an aromatic alcohol having a specific structure at a predetermined mass ratio, and the present invention has been accomplished.

[1] That is, the present invention includes the following aspects: A composition comprising:
   (A) 60 to 95 parts by mass of a (meth)acrylate represented by Formula (1): 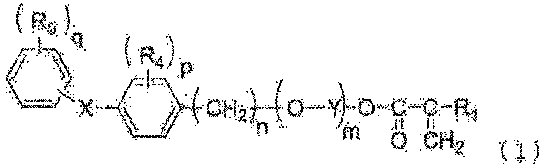 wherein
      X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof; wherein R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group; or R₂ and R₃ are optionally linked to each other to, together with the carbon atom to which they are attached, form a cyclic alkyl group having 3 to 10 carbon atoms;
      Y represents an optionally branched alkylene group having 2 to 6 carbon atoms, a cycloalkylene group having 6 to 10 carbon atoms, or an arylene group having 6 to 10 carbon atoms;
      R₁ represents a hydrogen atom or a methyl group;
      R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
      m represents an integer of 0 to 10;
      n represents an integer of 1 to 2;
      p represents an integer of 0 to 4; and
      q represents an integer of 0 to 5; and
   (B) 5 to 40 parts by mass of an aromatic alcohol represented by Formula (2): 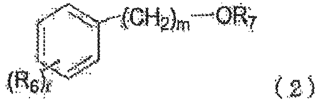 wherein
      R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
      R₇ represents a hydrogen atom, -R₈OH, or -(R₉)ₛH; wherein R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5;
      m represents an integer of 0 to 10; and
      r represents an integer of 0 to 5,
      provided that when R₇ represents a hydrogen atom, m represents an integer of 1 to 10;
[2] The composition according to aspect [1], wherein p and q in Formula (1) each represent 0;
[3] The composition according to aspect [1] or [2], wherein -(R₉)ₛH in Formula (2) is -(CH₂CH₂O)-H, -(CH₂CH₂O)₂-H, -(CH₂CH(CH₃)O)-H, or -(CH₂CH(CH₃)O)₂-H;
[4] The composition according to any one of aspects [1] to [3], wherein r in Formula (2) represents 0;
[5] The composition according to any one of aspects [1] to [4], further comprising:
   a polyvalent vinyl monomer copolymerizable with the (meth)acrylate represented by Formula (1) and represented by Formula (3): 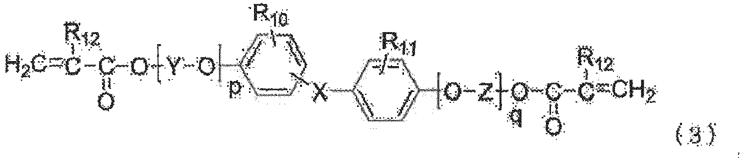 wherein
      R₁₀ and R₁₁ are each independently selected from a hydrogen atom, an alkyl group having 1 to 20 carbon atoms, an alkoxyl group having 1 to 20 carbon atoms, a cycloalkyl group having 3 to 20 carbon atoms, a cycloalkoxyl group having 5 to 20 carbon atoms, an aryl group having 6 to 20 carbon atoms, an aryloxy group having 6 to 20 carbon atoms, and a halogen atom;
      R₁₂ represents a hydrogen atom or a methyl group;
      X represents any structure selected from the group consisting of a single bond, -O-, -S-, -SO-, -SO₂-, -CO-, and structures represented by Formulas (4) to (7);
      Y and Z each independently represent an optionally branched alkylene group having 2 to 6 carbon atoms, a cycloalkylene group having 6 to 10 carbon atoms, or an arylene group having 6 to 10 carbon atoms; and
      p and q each independently represent an integer of 0 to 4, 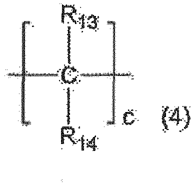
      wherein
      R₁₃ and R₁₄ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent;
      the substituents are each independently a halogen atom, an alkyl group having 1 to 20 carbon atoms, or an aryl group having 6 to 12 carbon atoms; and
      c represents an integer of 1 to 20; 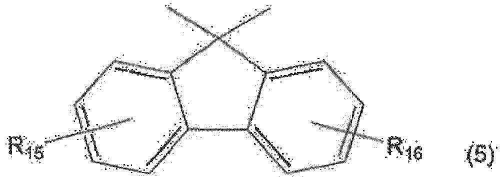
      wherein
      R₁₅ and R₁₆ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₅ and R₁₆ are bonded to each other to form a carbocycle or a heterocycle having 1 to 20 carbon atoms; and
      the substituents are each independently a halogen atom, an alkyl group having 1 to 20 carbon atoms, or an aryl group having 6 to 12 carbon atoms; 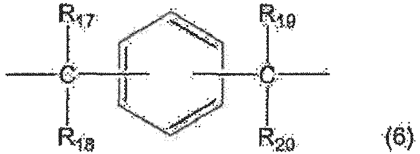
      wherein
      R₁₇ to R₂₀ each independently represent any one selected from the group consisting of a hydrogen atom, a halogen, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₇ and R₁₈ are bonded to each other to form a carbocycle or a heterocycle having 1 to 20 carbon atoms, and R₁₉ and R₂₀ are bonded to each other to form a carbocycle or a heterocycle having 1 to 20 carbon atoms; and
      the substituents are each independently a halogen atom, an alkyl group having 1 to 20 carbon atoms, or an aryl group having 6 to 12 carbon atoms; 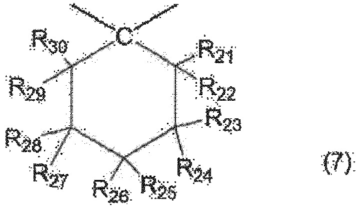
      wherein
      R₂₁ to R₃₀ each independently represent a hydrogen atom or an alkyl group having 1 to 3 carbon atoms;
[6] The composition according to aspect [5], wherein the composition contains 1 to 20 parts by mass of the polyvalent vinyl monomer represented by Formula (3) per 100 parts by mass in total of the (meth)acrylate represented by Formula (1) and the aromatic alcohol represented by Formula (2);
[7] The composition according to aspect [5] or [6], wherein Y in Formula (3) has a structure represented by Formula (5);
[8] The composition according to any one of aspects [1] to [7], wherein the composition is an active energy ray-curable composition;
[9] A coating material comprising the composition according to any one of aspects [1] to [8];
[10] A cured body comprising:
   (A) a polymer having a constitutional unit derived from a (meth)acrylate represented by Formula (1): 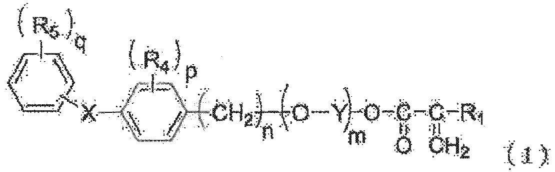 wherein
      X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof; wherein R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group; or R₂ and R₃ are optionally linked to each other to, together with the carbon atom to which they are attached, form a cyclic alkyl group having 3 to 10 carbon atoms;
      Y represents an optionally branched alkylene group having 2 to 6 carbon atoms, a cycloalkylene group having 6 to 10 carbon atoms, or an arylene group having 6 to 10 carbon atoms;
      R₁ represents a hydrogen atom or a methyl group;
      R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
      m represents an integer of 0 to 10;
      n represents an integer of 1 to 2;
      p represents an integer of 0 to 4; and
      q represents an integer of 0 to 5, or
      a copolymer including a constitutional unit derived from a (meth)acrylate represented by Formula (1) and a constitutional unit derived from a polyvalent vinyl monomer represented by Formula (3): 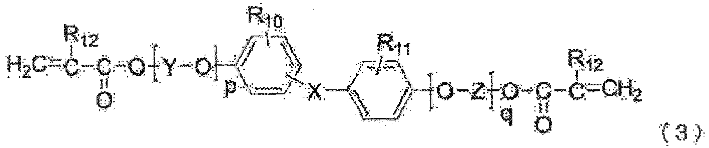
      wherein
      R₁₀ and R₁₁ are each independently selected from a hydrogen atom, an alkyl group having 1 to 20 carbon atoms, an alkoxyl group having 1 to 20 carbon atoms, a cycloalkyl group having 3 to 20 carbon atoms, a cycloalkoxyl group having 5 to 20 carbon atoms, an aryl group having 6 to 20 carbon atoms, an aryloxy group having 6 to 20 carbon atoms, and a halogen atom;
      R₁₂ represents a hydrogen atom or a methyl group;
      X represents any structure selected from the group consisting of a single bond, -O-, -S-, -SO-, -SO₂-, -CO-, and structures represented by Formulas (4) to (7);
      Y and Z each independently represent an optionally branched alkylene group having 2 to 6 carbon atoms, a cyclo alkylene group having 6 to 10 carbon atoms, or an arylene group having 6 to 10 carbon atoms; and
      p and q each independently represent an integer of 0 to 4, 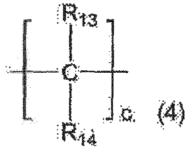
      wherein
      R₁₃ and R₁₄ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent;
      the substituents are each independently a halogen atom, an alkyl group having 1 to 20 carbon atoms, or an aryl group having 6 to 12 carbon atoms; and
      c represents an integer of 1 to 20; 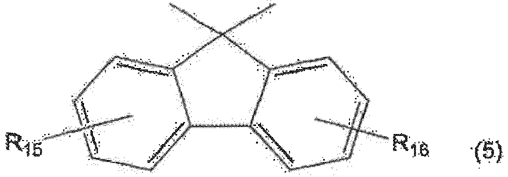
      wherein
      R₁₅ and R₁₆ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₅ and R₁₆ are bonded to each other to form a carbocycle or a heterocycle having 1 to 20 carbon atoms; and
      the substituents are each independently a halogen atom, an alkyl group having 1 to 20 carbon atoms, or an aryl group having 6 to 12 carbon atoms; 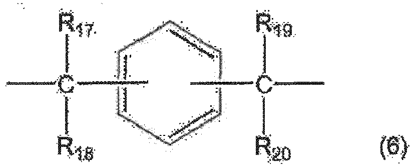
      wherein
      R₁₇ to R₂₀ each independently represent any one selected from the group consisting of a hydrogen atom, a halogen, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₇ and R₁₈ are bonded to each other to form a carbocycle or a heterocycle having 1 to 20 carbon atoms, and R₁₉ and R₂₀ are bonded to each other to form a carbocycle or a heterocycle having 1 to 20 carbon atoms; and
      the substituents are each independently a halogen atom, an alkyl group having 1 to 20 carbon atoms, or an aryl group having 6 to 12 carbon atoms; 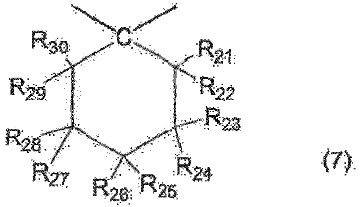
      wherein
      R₂₁ to R₃₀ each independently represent a hydrogen atom or an alkyl group having 1 to 3 carbon atoms; and
   (B) an aromatic alcohol represented by Formula (2): 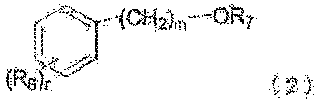 wherein
      R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
      R₇ represents a hydrogen atom, -R₈OH, or -(R₉)ₛH; wherein R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5;
      m represents an integer of 0 to 10; and
      r represents an integer of 0 to 5,
      provided that when R₇ represents a hydrogen atom, m represents an integer of 1 to 10, wherein
      the mass ratio of the constitutional unit derived from a (meth)acrylate represented by Formula (1) and the aromatic alcohol is 60:40 to 95:5; and
[11] A cured body prepared by curing the composition according to any one of aspects [1] to [8].

### EFFECTS OF INVENTION

According to the present invention, provided are a composition that has a low viscosity and, when cured, has a high refractive index and good drying properties and can be stored at low temperature without causing crystal precipitation for a long period of time and a coating material containing the composition. In addition, according to the present invention, a cured body of the composition can be provided.

### DESCRIPTION OF EMBODIMENTS

Embodiments of the present invention will now be described in detail.

### <Composition>

The composition of the present invention includes (A) 60 to 95 parts by mass of a (meth)acrylate represented by Formula (1): 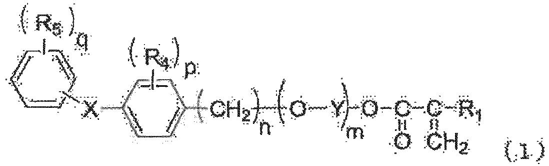 wherein
X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof; wherein R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group; or R₂ and R₃ are optionally linked to each other to, together with the carbon atom to which they are attached, form a cyclic alkyl group having 3 to 10 carbon atoms;
Y represents an optionally branched alkylene group having 2 to 6 carbon atoms, a cycloalkylene group having 6 to 10 carbon atoms, or an arylene group having 6 to 10 carbon atoms;
R₁ represents a hydrogen atom or a methyl group;
R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
m represents an integer of 0 to 10;
n represents an integer of 1 to 2;
p represents an integer of 0 to 4; and
q represents an integer of 0 to 5; and
(B) 5 to 40 parts by mass of an aromatic alcohol represented by Formula (2): 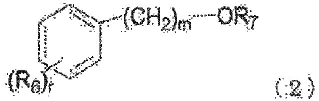 wherein
R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
R₇ represents a hydrogen atom, -R₈OH, or -(R₉)ₛH; wherein R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5;
m represents an integer of 0 to 10; and
r represents an integer of 0 to 5,
provided that when R₇ represents a hydrogen atom, m represents an integer of 1 to 10.

As described above, the composition of the present invention including a (meth)acrylate having a structure represented by Formula (1) and an aromatic alcohol having a structure represented by Formula (2) at a predetermined mass ratio has a low viscosity and, when cured, has a high refractive index and good drying properties and can be stored at low temperature without causing crystal precipitation for a long period of time. Although it is not restricted to a theory, it is assumed that addition of a predetermined amount of an aromatic alcohol having a structure represented by Formula (2) to a (meth)acrylate having a structure represented by Formula (1) not only can reduce the viscosity of the composition but also prevent crystal growth.

Each component contained in the composition of the present invention will now be described in order.

### 1. (Meth)acrylate

The (meth)acrylate used in the composition of the present invention has a structure represented by Formula (1):

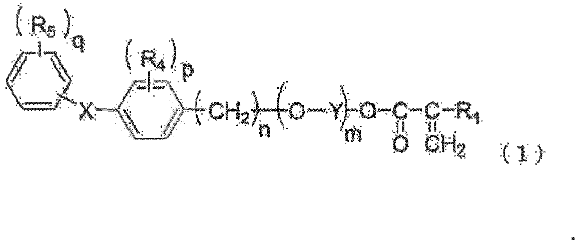

In Formula (1), X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof and preferably from the group consisting of a single bond, -C(R₂)(R₃)-, -O-, and any combination thereof. In the formula, R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group. Alternatively, R₂ and R₃ are optionally linked to each other to, together with the carbon atom to which they are attached, form a cyclic alkyl group having 3 to 10 carbon atoms. Preferably, R₂ and R₃ each represent a hydrogen atom.

Y represents an optionally branched alkylene group having 2 to 6 carbon atoms, a cycloalkylene group having 6 to 10 carbon atoms, or an arylene group having 6 to 10 carbon atoms.

R₁ represents a hydrogen atom or a methyl group, and preferably a hydrogen atom.

R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group.

m represents an integer of 0 to 10, preferably an integer of 0 to 5, and more preferably 0.

n represents an integer of 1 to 2, preferably 1.

p represents an integer of 0 to 4, preferably an integer of 0 to 2, and more preferably 0.

q represents an integer of 0 to 5, preferably an integer of 0 to 2, and more preferably 0.

More preferably, p and q each represent 0.

Examples of the (meth)acrylate represented by Formula (1) include 4-phenylbenzyl (meth)acrylate, 3-phenylbenzyl (meth)acrylate, 2-phenylbenzyl (meth)acrylate, 4-biphenylbenzyl (meth)acrylate, 3-biphenylbenzyl (meth)acrylate, 2-biphenylbenzyl (meth)acrylate, 4-benzylbenzyl (meth)acrylate, 3-benzylbenzyl (meth)acrylate, 2-benzylbenzyl (meth)acrylate, 4-phenethylbenzyl (meth)acrylate, 3-phenethylbenzyl (meth)acrylate, 2-phenethylbenzyl (meth)acrylate, 4-phenethylphenethyl (meth)acrylate, 3-phenethylphenethyl (meth)acrylate, 2-phenethylphenethyl (meth)acrylate, 4-(4-methylphenyl)benzyl (meth)acrylate, 3-(4-methylphenyl)benzyl (meth)acrylate, 2-(4-methylphenyl)benzyl (meth)acrylate, 4-(4-methoxyphenyl)benzyl (meth)acrylate, 3-(4-methoxyphenyl)benzyl (meth)acrylate, 2-(4-methoxyphenyl)benzyl (meth)acrylate, 4-(4-bromophenyl)benzyl (meth)acrylate, 3-(4-bromophenyl)benzyl (meth)acrylate, 2-(4-bromophenyl)benzyl (meth)acrylate, 4-benzoylbenzyl (meth)acrylate, 3-benzoylbenzyl (meth)acrylate, 2-benzoylbenzyl (meth)acrylate, 4-(phenylsulfinyl)benzyl (meth)acrylate, 3-(phenylsulfinyl)benzyl (meth)acrylate, 2-(phenylsulfinyl)benzyl (meth)acrylate, 4-(phenylsulfonyl)benzyl (meth)acrylate, 3-(phenylsulfonyl)benzyl (meth)acrylate, 2-(phenylsulfonyl)benzyl (meth)acrylate, 4-((phenoxycarbonyl)oxy)benzyl (meth)acrylate, 3-((phenoxycarbonyl)oxy)benzyl (meth)acrylate, 2-((phenoxycarbonyl)oxy)benzyl (meth)acrylate, 4-(((meth)acryloxy)methyl)phenyl benzoate, 3-(((meth)acryloxy)methyl)phenyl benzoate, 2-(((meth)acryloxy)methyl)phenyl benzoate, phenyl 4-(((meth)acryloxy)methyl) benzoate, phenyl 3-(((meth)acryloxy)methyl) benzoate, phenyl 2-(((meth)acryloxy)methyl) benzoate, 4-(1-phenylcycloxy)benzyl (meth)acrylate, 3-(1-phenylcycloxy)benzyl (meth)acrylate, 2-(1-phenylcycloxy)benzyl (meth)acrylate, 4-phenoxybenzyl (meth)acrylate, 3-phenoxybenzyl (meth)acrylate, 2-phenoxybenzyl (meth)acrylate, 4-(phenylthio)benzyl (meth)acrylate, 3-(phenylthio)benzyl (meth)acrylate, 2-(phenylthio)benzyl (meth)acrylate, and 3-methyl-4-(2-methylphenyl)benzyl methacrylate. These (meth)acrylates may be used singly or in combinations of two or more thereof. Among these (meth)acrylates, preferred are 2-phenylbenzyl (meth)acrylate, 4-phenylbenzyl (meth)acrylate, 4-phenoxybenzyl (meth)acrylate, and 4-benzylbenzyl (meth)acrylate; and more preferred are 2-phenylbenzyl acrylate, 4-phenylbenzyl acrylate, 4-phenoxybenzyl acrylate, and 4-benzylbenzyl acrylate.

The amount of the (meth)acrylate contained in the composition of the present invention is 60 to 95 parts by mass, preferably 65 to 90 parts by mass, and more preferably 70 to 90 parts by mass. An amount of the (meth)acrylate of 60 parts by mass or more can maintain a high refractive index of 1.600 or more after curing. An amount of 95 parts by mass or less allows to be mixed with an aromatic alcohol to effectively prevent crystal precipitation. Furthermore, an amount of the (meth)acrylate of 60 to 95 parts by mass can provide a cured body having excellent drying properties and water resistance.

### 2. Aromatic alcohol

The aromatic alcohol used in the composition of the present invention has a structure represented by Formula (2):

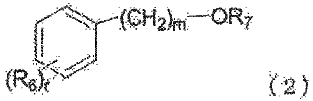

In Formula (2), R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group.

R₇ represents a hydrogen atom, -R₈OH, or -(R₉)ₛH. In the formula, R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5.

m represents an integer of 0 to 10, preferably an integer of 0 to 5, and more preferably an integer of 1 to 3.

r represents an integer of 0 to 5, preferably an integer of 0 to 2, and more preferably 0.

However, when R₇ represents a hydrogen atom, m represents an integer of 1 to 10, preferably an integer of 1 to 5, and more preferably an integer of 1 to 3.

In Formula (2), -(R₉)ₛH is preferably -(CH₂CH₂O)-H, -(CH₂CH₂O)₂-H, - (CH₂CH(CH₃)O)-H, or -(CH₂CH(CH₃)O)₂-H.

Examples of the aromatic alcohol represented by Formula (2) include benzyl alcohol, 4-methylbenzyl alcohol, 3-methylbenzyl alcohol, 2-methylbenzyl alcohol, 2-phenylethanol, 3-phenylpropanol, 1-phenyl-1-propanol, 1-phenyl-2-propanol, 4-phenyl-1-butanol, 4-phenyl-2-butanol, 1-phenyl-2-butanol, 2-phenyl-2-butanol, phenyl glycol, phenyl diglycol, benzyl glycol, benzyl diglycol, phenyl propylene glycol, and phenyl dipropylene glycol. These aromatic alcohols may be used singly or in combinations of two or more thereof. Among these aromatic alcohols, preferred are benzyl alcohol and benzyl glycol.

The amount of the aromatic alcohol contained in the composition of the present invention is 5 to 40 parts by mass, preferably 10 to 35 parts by mass, and more preferably 10 to 30 parts by mass. An amount of the aromatic alcohol of 5 parts by mass or more can effectively prevent crystal precipitation, and an amount of 40 parts by mass or less can maintain a high refractive index and good drying properties after curing.

### 3. Polyvalent vinyl monomer

The composition of the present invention can further optionally include a polyvalent vinyl monomer copolymerizable with the (meth)acrylate represented by Formula (1) and represented by Formula (3):

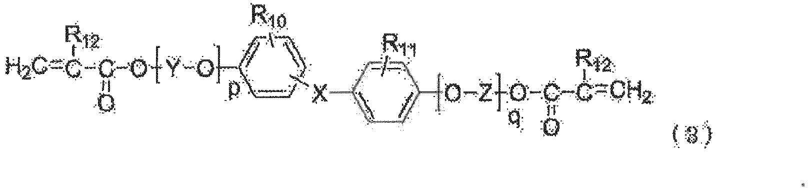

In Formula (3), R₁₀ and R₁₁ are each independently selected from a hydrogen atom, an alkyl group having 1 to 20 carbon atoms, an alkoxyl group having 1 to 20 carbon atoms, a cycloalkyl group having 3 to 20 carbon atoms, a cycloalkoxyl group having 5 to 20 carbon atoms, an aryl group having 6 to 20 carbon atoms, an aryloxy group having 6 to 20 carbon atoms, and a halogen atom, and are preferably hydrogen atoms.

R₁₂ represents a hydrogen atom or a methyl group.

X represents any structure selected from the group consisting of a single bond, -O-, -S-, -SO-, -SO₂-, -CO-, and structures represented by Formulas (4) to (7).

Y and Z each independently represent an optionally branched alkylene group having 2 to 6 carbon atoms, a cycloalkylene group having 6 to 10 carbon atoms, or an arylene group having 6 to 10 carbon atoms.

p and q each independently represent an integer of 0 to 4 and each preferably represent 0.

In Formula (4),

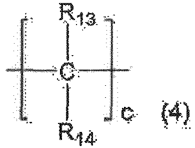

R₁₃ and R₁₄ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent, wherein the substituents are each independently a halogen atom, an alkyl group having 1 to 20 carbon atoms, or an aryl group having 6 to 12 carbon atoms; and R₁₃ and R₁₄ each preferably represent a hydrogen atom.

c represents an integer of 1 to 20, preferably an integer of 1 to 10, and more preferably an integer of 1 to 5.

In Formula (5),

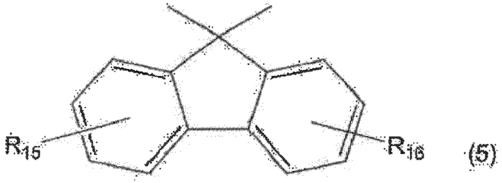

R₁₅ and R₁₆ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent, or R₁₅ and R₁₆ are bonded to each other to form a carbocycle or a heterocycle having 1 to 20 carbon atoms, wherein the substituents are each independently a halogen atom, an alkyl group having 1 to 20 carbon atoms, or an aryl group having 6 to 12 carbon atoms. R₁₅ and R₁₆ each preferably represent a hydrogen atom.

In Formula (6),

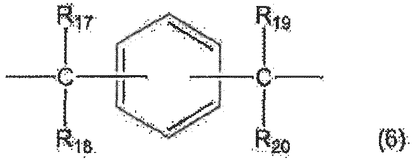

R₁₇ to R₂₀ each independently represent any one selected from the group consisting of a hydrogen atom, a halogen, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₇ and R₁₈ are bonded to each other to form a carbocycle or a heterocycle having 1 to 20 carbon atoms, and R₁₉ and R₂₀ are bonded to each other to form a carbocycle or a heterocycle having 1 to 20 carbon atoms, wherein the substituents are each independently a halogen atom, an alkyl group having 1 to 20 carbon atoms, or an aryl group having 6 to 12 carbon atoms. R₁₇ to R₂₀ each preferably represent a hydrogen atom.

In Formula (7),

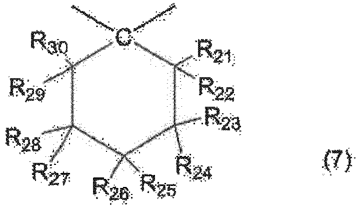

R₂₁ to R₃₀ each independently represent a hydrogen atom or an alkyl group having 1 to 3 carbon atoms. R₂₁ to R₃₀ each preferably represent a hydrogen atom.

In Formula (3), Y preferably has a structure represented by Formula (5).

Examples of the polyvalent vinyl monomer represented by Formula (3) include 9,9-bis[4-(2-(meth)acryloyloxyethoxy)phenyl]fluorene, 4,4'-isopropylidenediphenol di(meth)acrylate, 2,2'-bis[4-(2-(meth)acryloyloxyethoxy)phenyl]propane, bis[4-(2-(meth)acryloyloxyethoxy)phenyl]methane, 1,1'-bis[4-(2-(meth)acryloyloxyethoxy)phenyl]methane, bis [4-(2-(meth)acryloyloxyethoxy)phenyl]ether, bis[4-(2-(meth)acryloyloxyethoxy)phenyl]sulfoxide, bis[4-(2-(meth)acryloyloxyethoxy)phenyl]sulfide, bis[4-(2-(meth)(meth)acryloyloxyethoxy)phenyl]sulfone, bis(4-(2-(meth)acryloyloxyethoxy)phenyl]ketone, ethoxylated bisphenol A diacrylate, and 4,4'-di(meth)acryloyloxy biphenyl. Among these polyvalent vinyl monomers, preferred are 9,9-bis[4-(2-(meth)acryloyloxyethoxy)phenyl]fluorene, 4,4'-isopropylidenediphenol di(meth)acrylate, ethoxylated bisphenol A diacrylate, and 2,2'-bis[4-(2-(meth)acryloyloxyethoxy)phenyl]propane, and more preferred are ethoxylated bisphenol A diacrylate and 9,9-bis[4-(2-(meth)acryloyloxyethoxy)phenyl]fluorene. Commercially available examples of the polyvalent vinyl monomer represented by Formula (3) include, but not limited to, ABE-300, A-BPE-4, and A-BPEF manufactured by Shin-Nakamura Chemical Co., Ltd.; Light Acrylate BP-4EAL manufactured by Kyoeisha Chemical Co., Ltd.; Viscoat #700HV manufactured by Shin-Nakamura Chemical Co., Ltd.; and FA-324A manufactured by Hitachi Chemical Company, Ltd.

The amount of the polyvalent vinyl monomer represented by Formula (3) is preferably 1 to 20 parts by mass, more preferably 5 to 15 parts by mass, and most preferably 8 to 12 parts by mass per 100 parts by mass in total of the (meth)acrylate represented by Formula (1) and the aromatic alcohol represented by Formula (2). An amount of the polyvalent vinyl monomer of 1 to 20 parts by mass can improve the drying properties of the composition after curing without impairing other characteristics.

### 4. Optional additives

The composition of the present invention can include various optional additives depending on the application within a range not departing from the gist of the present invention, in addition to the above-described components. Such an additive is, for example, at least one selected from the group consisting of a heat stabilizer, an antioxidant, a flame retardant, a flame retardant auxiliary, an ultraviolet absorber, a mold release agent, and a colorant. The amount of the additives is preferably 0.005 to 0.1 parts by mass, more preferably 0.01 to 0.05 parts by mass, per 100 parts by mass in total of the (meth)acrylate represented by Formula (1) and the aromatic alcohol represented by Formula (2).

The composition of the present invention can be produced by any known method and may be prepared by simply mixing the above-described components.

The composition of the present invention can be cured by a variety of methods. The composition of the present invention is preferably an active energy ray-curable composition, and the details are described later.

### <Coating material>

The coating material includes the above-described composition. The coating material of the present invention can be mainly used in, for example, coating agents or hard coating agents for optical members.

A coating material of the present invention applied to a general substrate, such as a plastic substrate, may contain a wetting agent, such as silicone or an acrylic compound, for enhancing wetting of the surface of the substrate. Preferred examples of the wetting agent include BYK331, BYK333, BYK340, BYK347, BYK348, BYK378, BYK380, and BYK381 available from BYK-Chemie. The amount of such a wetting agent in the coating material is preferably within a range of 0.01% to 2.0% by mass based on the total mass of the coating material.

In order to improve the adhesiveness to various materials, the coating material may contain a tackifier, such as a xylene resin, a terpene resin, a phenolic resin, and a rosin resin, as needed. The amount of such a tackifier is preferably within a range of 0.01% to 2.0% by mass based on the total mass of the coating material.

In order to improve the adhesiveness to various materials, the coating material may contain a coupling agent, such as a silane coupling agent and a titan coupling agent. The amount of such a coupling agent is preferably within a range of 0.01 % to 5.0% by mass based on the total mass of the coating material.

In order to improve various performances, such as shock resistance, the coating material may contain an inorganic filler, such as silica, alumina, mica, talc, aluminum flakes, and glass flakes. The amount of such a filler is preferably within a range of 0.01% to 10.0% by mass based on the total amount of the coating material.

Furthermore, when the coating material of the present invention is applied to a general substrate, such as a metal, concrete, or plastic substrate, the coating material may contain a defoaming agent of a silicone or acrylic compound for enhancing disappearance of foam being generated during stirring and mixing or coating. Preferred examples of the defoaming agent include BYK019, BYK052, BYK065, BYK066N, BYK067N, BYK070, and BYK080 available from BYK-Chemie, and BYK065 is particularly preferred. The amount of such a defoaming agent is within a range of 0.01% to 3.0% by mass based on the total mass of the coating material.

The coating material of the present invention may include, as needed, a variety of components in required quantities, for example, antirust agents, such as zinc phosphate, iron phosphate, calcium molybdate, vanadium oxide, water-dispersed silica, and fumed silica; organic pigments, such as phthalocyanine organic pigments and condensed polycyclic organic pigments; and inorganic pigments, such as titanium oxide, zinc oxide, calcium carbonate, barium sulfate, alumina, and carbon black.

The coating material of the present invention may be applied onto a substrate with any coating system that is generally used, such as bar coater coating, Meyer bar coating, air knife coating, gravure coating, reverse gravure coating, micro gravure coating, micro reverse gravure coater coating, die coater coating, slot die coater coating, vacuum die coater coating, dip coating, spin coating, spray coating, and brush coating. Preferred are roll coating and spray coating.

### <Cured body>

The cured body of the present invention is a cured body prepared by curing the above-described composition. The cured body of the present invention has a high refractive index of 1.580 or more and has excellent drying properties and water resistance. The cured body of the present invention preferably has a high refractive index of 1.585 or more, more preferably a high refractive index of 1.590 or more.

The cured body of the present invention includes:
(A) a polymer having a constitutional unit derived from a (meth)acrylate represented by Formula (1): 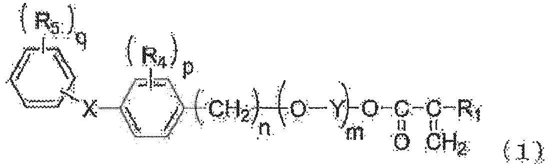 or
   a copolymer having a constitutional unit derived from a (meth)acrylate represented by Formula (1) and a constitutional unit derived from a polyvalent vinyl monomer represented by Formula (3): 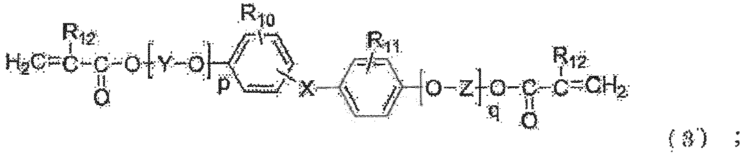 and
(B) an aromatic alcohol represented by Formula (2): 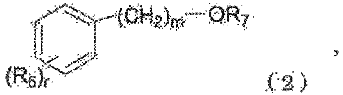 wherein the mass ratio of the constitutional unit derived from a (meth)acrylate represented by Formula (1) and the aromatic alcohol is 60:40 to 95:5.

Herein, X, Y, R₁, R₄, R₅, m, n, p, and q in Formula (1) are synonymous with those in the composition of the present invention. R₆, R₇, m, and r in Formula (2) and R₁₀, R₁₁, R₁₂, X, Y, Z, p, and q in Formula (3) are synonymous with those in the composition of the present invention.

The constitutional unit derived from a (meth)acrylate represented by Formula (1) is a constitutional unit having a structure represented by Formula (1a):

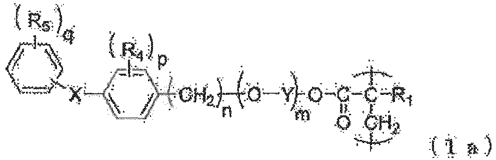

The constitutional unit derived from a polyvalent vinyl monomer represented by Formula (3) is a constitutional unit having a structure represented by Formula (3a):

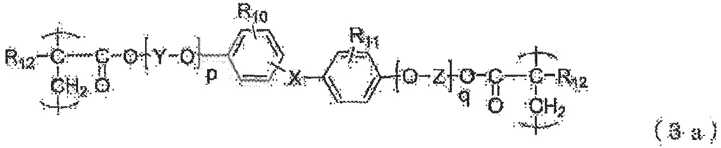

Herein, X, Y, R₁, R₄, R₅, m, n, p, and q in Formula (1a) correspond to those in Formula (1); and R₁₀, R₁₁, R₁₂, X, Y, Z, p, and q in Formula (3a) correspond to those in Formula (3).

The cured body of the present invention can be prepared by curing the composition of the present invention as described above. Herein, the curing method is not particularly limited and may be performed by any known method. For example, the composition of the present invention may be cured by photopolymerization through irradiation with active energy rays. In the present specification, the term "active energy ray" refers to ultraviolet ray, electron ray, ion beam, X-ray, and so on.

When the composition of the present invention is cured by active energy rays, a photopolymerization initiator is not necessarily needed. However, in the case of using a photopolymerization initiator, examples of the initiator include Irgacure (registered trademark) 2959 (1-[4-(2-hydroxyethoxy)phenyl]-2-hydroxy-2-methyl-1-propan-1-one, Irgacure (registered trademark) 184 (1-hydroxycyclohexyl phenyl ketone), Irgacure (registered trademark) 500 (1-hydroxycyclohexyl phenyl ketone, benzophenone), Irgacure (registered trademark) 651 (2,2-dimethoxy-1,2-diphenylethan-1-one), Irgacure (registered trademark) 369 (2-benzyl-2-dimethylamino-1-(4-morpholinophenyl)butanone-1), Irgacure (registered trademark) 907 (2-methyl-1[4-methylthiophenyl]-2-morpholinopropan-1-one, Irgacure (registered trademark) 819 (bis(2,4,6-trimethylbenzoyl)-phenylphosphine oxide, Irgacure (registered trademark) 1800 (bis(2,6-dimethoxybenzoyl)-2,4,4-trimethyl-pentylphosphine oxide, 1-hydroxy-cyclohexyl-phenyl-ketone), Irgacure (registered trademark) 1800 (bis(2,6-dimethoxybenzoyl)-2,4,4-trimethyl-pentylphosphine oxide, 2-hydroxy-2-methyl-1-phenyl-1-propan-1-one), Irgacure (registered trademark) OXE01 (1,2-octanedione, 1-[4-(phenylthio)phenyl]-2-(O-benzoyloxime), Darocur (registered trademark) 1173 (2-hydroxy-2-methyl-1-phenyl-1-propan-1-one), Darocur (registered trademark) 1116, 1398, 1174, and 1020, and CGI242 (ethanone, 1-[9-ethyl-6-(2-methylbenzoyl)-9H-carbazol-3-yl]-1-(O-acetyloxime) available from Ciba Specialty Chemicals Inc.; Lucirin TPO (2,4,6-trimethylbenzoyl diphenylphosphine oxide) and Lucirin TPO-L (2,4,6-trimethylbenzoyl ethoxyphenylphosphine oxide) available from BASF; ESACURE 1001M (1-[4-benzoyl phenylsulfanil]phenyl]-2-methyl-2-(4-methylphenylsulfonyl)propan-1-one available from DKSH Japan; Adekaoptomer (registered trademark) N-1414 (carbazole/phenone series), Adekaoptomer (registered trademark) N-1717 (acridine series), and Adekaoptomer (registered trademark) N-1606 (triazine series) available from ADEKA Corporation; TFE-triazine (2-[2-(furan-2-yl)vinyl]-4,6-bis(trichloromethyl)-1,3,5-triazine) manufactured by Sanwa Chemical Co., Ltd.; TME-triazine (2-[2-(5-methylfuran-2-yl)vinyl]-4,6-bis(trichloromethyl)-1,3,5-triazine) manufactured by Sanwa Chemical Co., Ltd.; MP-triazine (2-(4-methoxyphenyl)-4,6-bis(trichloromethyl)-1,3,5-triazine) manufactured by Sanwa Chemical Co., Ltd.; TAZ-113 (2-[2-(3,4-dimethoxyphenyl)ethenyl]-4,6-bis(trichloromethyl)-1,3,5-triazine) manufactured by Midori Chemical Co., Ltd.; and TAZ-108 (2-(3,4-dimethoxyphenyl)-4,6-bis(trichloromethyl)-1,3,5-triazine) manufactured by Midori Chemical Co., Ltd.; and benzophenone, 4,4'-bis(diethylamino) benzophenone, methyl-2-benzophenone, 4-benzoyl-4'-methyldiphenyl sulfide, 4-phenylbenzophenone, ethyl Michler's ketone, 2-chlorothioxanthone, 2-methylthioxanthone, 2-isopropylthioxanthone, 4-isopropylthioxanthone, 2,4-diethylthioxanthone, 1-chloro-4-propoxythioxanthone, 2-methylthioxanthone, thioxanthone ammonium salt, benzoin, 4,4'-dimethoxybenzoin, benzoin methyl ether, benzoin ethyl ether, benzoin isopropyl ether, benzoin isobutyl ether, benzyl dimethyl ketal, 1,1,1-trichloroacetophenone, diethoxyacetophenone, dibenzosuberone, methyl o-benzoylbenzoate, 2-benzoyl naphthalene, 4-benzoyl biphenyl, 4-benzoyl diphenyl ether, 1,4-benzoyl benzene, benzyl, 10-butyl-2-chloroacridone, [4-(methylphenylthio)phenyl]phenylmethane), 2-ethylanthraquinone, 2,2-bis(2-chlorophenyl) 4,5,4',5'-tetrakis(3,4,5-trimethoxyphenyl) 1,2'-biimidazole, 2,2-bis(o-chlorophenyl) 4,5,4',5'-tetraphenyl-1,2'-biimidazole, tris(4-dimethylaminophenyl)methane, ethyl-4-(dimethylamino) benzoate, 2-(dimethylamino)ethyl benzoate, and butoxyethyl-4-(dimethylamino) benzoate. These photopolymerization initiators may be used singly or in combinations of two or more thereof. The amount of such a photopolymerization initiator in the composition is 0.01% to 15% by mass and preferably 0.1% to 10% by mass.

### EXAMPLES

The present invention will now be described in detail with reference to Examples, but the technical scope of the present invention is not limited to the following Examples. The terms "part(s)" and "%" in Examples refer to "part(s) by mass" and "% by mass", respectively.

The physical properties in Examples and Comparative Examples were measured as follows.

### 1. Viscosity of composition

The viscosity of each composition prepared as described below was measured with an E-type viscometer (model TV-22) at a measurement temperature of 25°C.

### 2. Refractive index of composition

Each composition prepared as described below was subjected to measurement with a multiwavelength Abbe refractometer DR-M2 (manufactured by Atago Co., Ltd.) at a measurement wavelength of 589 nm and a measurement temperature of 23°C.

### 3. Refractive index of cured material

The cured material of each composition prepared as described below was subjected to measurement with a multiwavelength Abbe refractometer DR-M2 (manufactured by Atago Co., Ltd.) at a measurement wavelength of 589 nm and a measurement temperature of 23 °C.

### 4. Drying properties

The surface of the cured body of each composition prepared as described below was rubbed with a swab impregnated with methanol, and the change in appearance of the cured body surface was visually evaluated.
A: No change,
B: Slight rubbed mark,
C: Slight whitening,
D: Dissolution.

### 5. Water resistance

One drop (about 2 mL) of water was added dropwise to the cured body of each composition prepared as described below, and the cured body was covered with a lid to prevent the water from evaporating and was left to stand at 23°C for one day. The water was then wiped off and, and the change in appearance of the cured body surface was visually evaluated.
A: No change,
B: Slight marking,
C: Slight whitening,
D: Whitening.

### <Example 1: Preparation of Composition a and cured body thereof>

Twenty parts by mass of 2-phenylbenzyl acrylate, 70 parts by mass of 4-phenylbenzyl acrylate, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition a. Subsequently, the Composition a (application quantity: about 20 µm thickness) was applied to a polyester film (Toyobo Ester Film E5100, manufactured by Toyobo Co., Ltd.), as a substrate, having a thickness of 50 µm and was immediately irradiated with ultraviolet rays using a conveyor-type ultraviolet irradiation device U-0303 (manufactured by GS Yuasa International Ltd., using a high pressure mercury lamp, lamp output: 80 W/cm, conveyor speed: 3 m/min) set to a ultraviolet irradiation dose of 540 mJ/cm² to prepare a cured body of Composition a.

### <Example 2: Preparation of Composition b and cured body thereof>

Ninety parts by mass of 4-phenylbenzyl acrylate, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition b. Subsequently, a cured body of Composition b was prepared as in Example 1.

### <Example 3: Preparation of Composition c and cured body thereof>

Ninety parts by mass of 4-phenylbenzyl acrylate, 10 parts by mass of benzyl alcohol as an aromatic alcohol, and 3 parts by mass of Irgacure 184 (manufactured by Ciba Specialty Chemicals Inc.) as a photopolymerization initiator were mixed and sufficiently stirred to prepare Composition c. Subsequently, a cured body of Composition c was prepared as in Example 1.

### <Example 4: Preparation of Composition d and cured body thereof>

Ninety parts by mass of 4-phenylbenzyl acrylate, 10 parts by mass of 9,9-bis[4-(2-acryloyloxyethoxy)phenyl]fluorene, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition d. Subsequently, a cured body of Composition d was prepared as in Example 1.

### <Example 5: Preparation of Composition e and cured body thereof>

Ninety parts by mass of 4-phenylbenzyl acrylate, 5 parts by mass of 9,9-bis[4-(2-acryloyloxyethoxy)phenyl]fluorene, 5 parts by mass of ethoxylated bisphenol A diacrylate (ABE-300, manufactured by Shin-Nakamura Chemical Co., Ltd.), 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition e. Subsequently, a cured body of Composition e was prepared as in Example 1.

Herein, the ethoxylated bisphenol A diacrylate (ABE-300, manufactured by Shin-Nakamura Chemical Co., Ltd.) has a structure represented by the following formula: 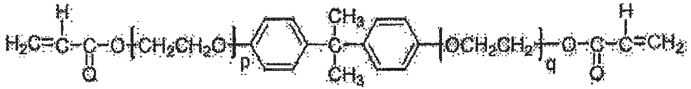 where, p + q = 3.

### <Example 6: Preparation of Composition f and cured body thereof>

Ninety parts by mass of 4-phenylbenzyl acrylate, 10 parts by mass of ethoxylated bisphenol A diacrylate (ABE-300, manufactured by Shin-Nakamura Chemical Co., Ltd.), 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition f. Subsequently, a cured body of Composition f was prepared as in Example 1.

### <Example 7: Preparation of Composition g and cured body thereof>

Ninety parts by mass of 4-phenoxybenzyl acrylate, 10 parts by mass of 9,9-bis[4-(2-acryloyloxyethoxy)phenyl]fluorene, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition g. Subsequently, a cured body of Composition g was prepared as in Example 1.

### <Example 8: Preparation of Composition h and cured body thereof>

Ninety parts by mass of 4-benzylbenzyl acrylate, 10 parts by mass of 9,9-bis[4-(2-acryloyloxyethoxy)phenyl]fluorene, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition h. Subsequently, a cured body of Composition h was prepared as in Example 1.

### <Example 9: Preparation of Composition i and cured body thereof>

Seventy parts by mass of 4-phenylbenzyl acrylate, 30 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition i. Subsequently, a cured body of Composition i was prepared as in Example 1.

### <Example 10: Preparation of Composition j and cured body thereof>

Sixty parts by mass of 4-phenylbenzyl acrylate, 40 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition j. Subsequently, a cured body of Composition j was prepared as in Example 1.

### <Example 11: Preparation of Composition k and cured body thereof>

Sixty parts by mass of 4-phenylbenzyl acrylate, 10 parts by mass of 9,9-bis[4-(2-acryloyloxyethoxy)phenyl]fluorene, 40 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition k. Subsequently, a cured body of Composition k was prepared as in Example 1.

### <Comparative Example 1: Preparation of Composition 1 and cured body thereof>

Thirty parts by mass of 2-phenylbenzyl acrylate, 70 parts by mass of 4-phenylbenzyl acrylate, and 3 parts by mass of Irgacure 184 (manufactured by Ciba Specialty Chemicals Inc.) as a photopolymerization initiator were mixed and sufficiently stirred to prepare Composition 1. Subsequently, a cured body of Composition 1 was prepared as in Example 1.

### <Comparative Example 2: Preparation of Composition m and cured body thereof>

Fifty parts by mass of 4-phenylbenzyl acrylate, 50 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition m. Subsequently, a cured body of Composition m was prepared as in Example 1.

### <Comparative Example 3: Preparation of Composition n>

Ninety parts by mass of 4-phenylphenyl acrylate, 10 parts by mass of benzyl glycol as an aromatic alcohol, and 3 parts by mass of Irgacure 184 (manufactured by Ciba Specialty Chemicals Inc.) as a photopolymerization initiator were mixed and sufficiently stirred to prepare Composition n. Composition n was in a solid state, unlike the compositions of Examples and other Comparative Examples, and the measurement of physical properties and curing could not be performed.

Table 1 shows the formulations of the compositions prepared in Examples 1 to 11 and Comparative Examples 1 to 3. Table 2 shows each physical property of the resulting compositions and cured bodies.

**Table 1**

| Composition | (A) (Meth)acrylates represented by Formula (1) | | | | (Meth)acrylate other than (meth)acrylates represented by Formula (1) | (B) Aromatic alcohols | | (C) Polyvalent vinyl monomers | | Photopolymerization initiator | State of composition |
|---|---|---|---|---|---|---|---|---|---|---|---|
| | 2-Phenylbenzyl acrylate | 4-Phenylbenzyl acrylate | 4-Phenoxybenzyl acrylate | 4-Benzylbenzyl acrylate | 4-Phenylphenyl acrylate | Benzyl glycol | Benzyl alcohol | 9,9-Bis[4-(2-acryloyloxy-ethoxy)phenyl] fluorene | Ethoxylated bisphenol A diacrylate (p+q=3) | Irgacure 184 | |
| a | 20 | 70 | | | | 10 | | | | 3 | Liquid |
| b | | 90 | | | | 10 | | | | 3 | Liquid |
| c | | 90 | | | | | 10 | | | 3 | Liquid |
| d | | 90 | | | | 10 | | 10 | | 3 | Liquid |
| e | | 90 | | | | 10 | | 5 | 5 | 3 | Liquid |
| f | | 90 | | | | 10 | | | 10 | 3 | Liquid |
| g | | | 90 | | | 10 | | 10 | | 3 | Liquid |
| h | | | | 90 | | 10 | | 10 | | 3 | Liquid |
| i | | 70 | | | | 30 | | | | 3 | Liquid |
| j | | 60 | | | | 40 | | | | 3 | Liquid |
| k | | 60 | | | | 40 | | 10 | | 3 | Liquid |
| l | 30 | 70 | | | | | | | | 3 | Liquid |
| m | | 50 | | | | 50 | | | | 3 | Liquid |
| n | | | | | 90 | 10 | | | | 3 | Solid |

**Table 2**

| Example | Composition | Before curing | | | After curing | | |
|---|---|---|---|---|---|---|---|
| | | Viscosity of composition (mPa·sec/25°C) | Refractive index of composition | Crystal precipitation (0°C/month) | Refractive index of cured material | Drying properties | Water resistance |
| Example 1 | a | 20 | 1.582 | No | 1.609 | B | B |
| Example 2 | b | 35 | 1.588 | No | 1.610 | B | A |
| Example 3 | c | 26 | 1.589 | No | 1.615 | B | B |
| Example 4 | d | 40 | 1.590 | No | 1.616 | A | A |
| Example 5 | e | 35 | 1.583 | No | 1.611 | A | A |
| Example 6 | f | 26 | 1.580 | No | 1.608 | A | A |
| Example 7 | g | 28 | 1.570 | No | 1.604 | A | A |
| Example 8 | h | 26 | 1.568 | No | 1.602 | A | A |
| Example 9 | i | 20 | 1.575 | No | 1.609 | B | B |
| Example 10 | j | 12 | 1.567 | No | 1.600 | C | B |
| Example 11 | k | 25 | 1,574 | No | 1.610 | A | B |
| Comparative Example 1 | l | 25 | 1.580 | Yes | 1.612 | B | A |
| Comparative Example 2 | m | 18 | 1.556 | No | 1.580 | D | C |
| Comparative Example 3 | n | Unmeasurable | Unmeasurable | Unmeasurable | - | - | - |

## Claims

1. A composition comprising:
(A) 60 to 95 parts by mass of a (meth)acrylate represented by Formula (1): 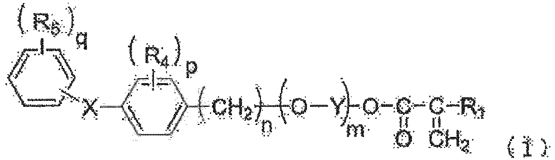 wherein
X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof; wherein R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group; or R₂ and R₃ are optionally linked to each other to, together with the carbon atom to which they are attached, form a cyclic alkyl group having 3 to 10 carbon atoms;
Y represents an optionally branched alkylene group having 2 to 6 carbon atoms, a cycloalkylene group having 6 to 10 carbon atoms, or an arylene group having 6 to 10 carbon atoms;
R₁ represents a hydrogen atom or a methyl group;
R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
m represents an integer of 0 to 10;
n represents an integer of 1 to 2;
p represents an integer of 0 to 4; and
q represents an integer of 0 to 5; and
(B) 5 to 40 parts by mass of an aromatic alcohol represented by Formula (2): 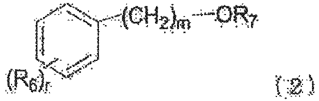 wherein
R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
R₇ represents a hydrogen atom, -R₈OH, or -(R₉)ₛH; wherein R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5;
m represents an integer of 0 to 10; and
r represents an integer of 0 to 5,
provided that when R₇ represents a hydrogen atom, m represents an integer of 1 to 10.

2. The composition according to claim 1, wherein p and q in Formula (1) each represent 0.

3. The composition according to claim 1 or 2, wherein -(R₉)ₛH in Formula (2) is -(CH₂CH₂O)-H, -(CH₂CH₂O)₂-H, -(CH₂CH(CH₃)O)-H, or -(CH₂CH(CH₃)O)₂-H.

4. The composition according to any one of claims 1 to 3, wherein r in Formula (2) represents 0.

5. The composition according to any one of claims 1 to 4 further comprising:
a polyvalent vinyl monomer copolymerizable with the (meth)acrylate represented by Formula (1) and represented by Formula (3): 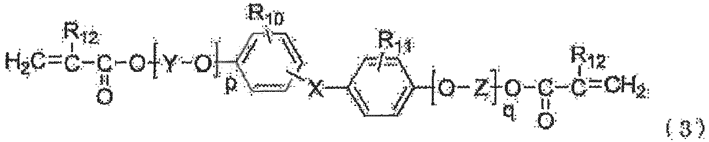 wherein
R₁₀ and R₁₁ are each independently selected from a hydrogen atom, an alkyl group having 1 to 20 carbon atoms, an alkoxyl group having 1 to 20 carbon atoms, a cycloalkyl group having 3 to 20 carbon atoms, a cycloalkoxyl group having 5 to 20 carbon atoms, an aryl group having 6 to 20 carbon atoms, an aryloxy group having 6 to 20 carbon atoms, and a halogen atom;
R₁₂ represents a hydrogen atom or a methyl group;
X represents any structure selected from the group consisting of a single bond, -O-, -S-, -SO-, -SO₂-, -CO-, and structures represented by Formulas (4) to (7);
Y and Z each independently represent an optionally branched alkylene group having 2 to 6 carbon atoms, a cycloalkylene group having 6 to 10 carbon atoms, or an arylene group having 6 to 10 carbon atoms; and
p and q each independently represent an integer of 0 to 4, 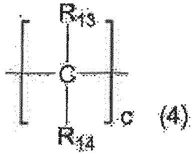
wherein
R₁₃ and R₁₄ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent;
the substituents are each independently a halogen atom, an alkyl group having 1 to 20 carbon atoms, or an aryl group having 6 to 12 carbon atoms; and
c represents an integer of 1 to 20; 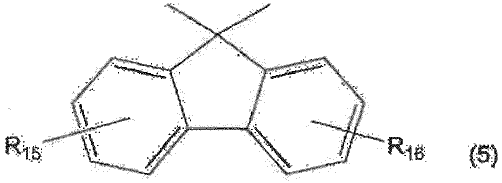
wherein
R₁₅ and R₁₆ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₅ and R₁₆ are bonded to each other to form a carbocycle or a heterocycle having 1 to 20 carbon atoms; and
the substituents are each independently a halogen atom, an alkyl group having 1 to 20 carbon atoms, or an aryl group having 6 to 12 carbon atoms; 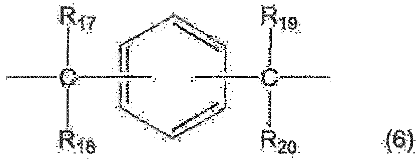
wherein
R₁₇ to R₂₀ each independently represent any one selected from the group consisting of a hydrogen atom, a halogen, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₇ and R₁₈ are bonded to each other to form a carbocycle or a heterocycle having 1 to 20 carbon atoms, and R₁₉ and R₂₀ are bonded to each other to form a carbocycle or a heterocycle having 1 to 20 carbon atoms; and
the substituents are each independently a halogen atom, an alkyl group having 1 to 20 carbon atoms, or an aryl group having 6 to 12 carbon atoms; 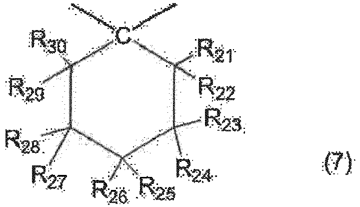
wherein
R₂₁ to R₃₀ each independently represent a hydrogen atom or an alkyl group having 1 to 3 carbon atoms.

6. The composition according to claim 5, wherein composition comprises 1 to 20 parts by mass of the polyvalent vinyl monomer represented by Formula (3) per 100 parts by mass in total of the (meth)acrylate represented by Formula (1) and the aromatic alcohol represented by Formula (2).

7. The composition according to claim 5 or 6, wherein Y in Formula (3) has a structure represented by Formula (5).

8. The composition according to any one of claims 1 to 7, wherein the composition is an active energy ray-curable composition.

9. A coating material comprising the composition according to any one of claims 1 to 8.

10. A cured body comprising:
(A) a polymer having a constitutional unit derived from a (meth)acrylate represented by Formula (1): 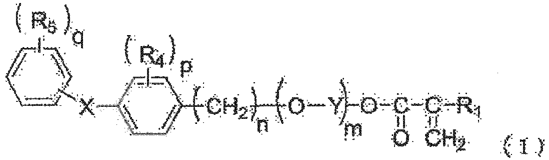 wherein
X represents a single bond, or a divalent group selected from the group consisting of -C(R₂)(R₃)-, -C(=O)-, -O-, -OC(=O)-, -OC(=O)O-, -S-, -SO-, -SO₂-, and any combination thereof; wherein R₂ and R₃ each independently represent a hydrogen atom, a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a phenyl group, or a phenylphenyl group; or R₂ and R₃ are optionally linked to each other to, together with the carbon atom to which they are attached, form a cyclic alkyl group having 3 to 10 carbon atoms;
Y represents an optionally branched alkylene group having 2 to 6 carbon atoms, a cycloalkylene group having 6 to 10 carbon atoms, or an arylene group having 6 to 10 carbon atoms;
R₁ represents a hydrogen atom or a methyl group;
R₄ and R₅ each independently represent a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
m represents an integer of 0 to 10;
n represents an integer of 1 to 2;
p represents an integer of 0 to 4; and
q represents an integer of 0 to 5, or
a copolymer including a constitutional unit derived from a (meth)acrylate represented by Formula (1) and a constitutional unit derived from a polyvalent vinyl monomer represented by Formula (3): 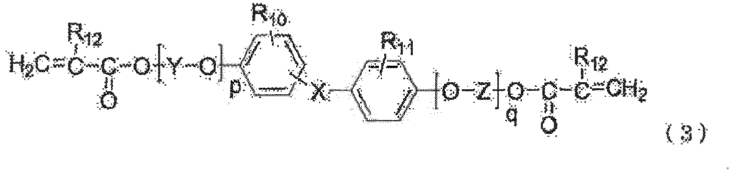
wherein
R₁₀ and R₁₁ are each independently selected from a hydrogen atom, an alkyl group having 1 to 20 carbon atoms, an alkoxyl group having 1 to 20 carbon atoms, a cycloalkyl group having 3 to 20 carbon atoms, a cycloalkoxyl group having 5 to 20 carbon atoms, an aryl group having 6 to 20 carbon atoms, an aryloxy group having 6 to 20 carbon atoms, and a halogen atom;
R₁₂ represents a hydrogen atom or a methyl group;
X represents any structure selected from the group consisting of a single bond, -O-, -S-, -SO-, -SO₂-, -CO-, and structures represented by Formulas (4) to (7);
Y and Z each independently represent an optionally branched alkylene group having 2 to 6 carbon atoms, a cycloalkylene group having 6 to 10 carbon atoms, or an arylene group having 6 to 10 carbon atoms; and
p and q each independently represent an integer of 0 to 4, 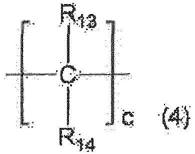
wherein
R₁₃ and R₁₄ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent;
the substituents are each independently a halogen atom, an alkyl group having 1 to 20 carbon atoms, or an aryl group having 6 to 12 carbon atoms; and
c represents an integer of 1 to 20; 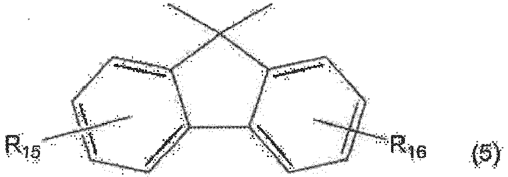
wherein
R₁₅ and R₁₆ each independently represent any one selected from the group consisting of a hydrogen atom, a halogen atom, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₅ and R₁₆ are bonded to each other to form a carbocycle or a heterocycle having 1 to 20 carbon atoms; and
the substituents are each independently a halogen atom, an alkyl group having 1 to 20 carbon atoms, or an aryl group having 6 to 12 carbon atoms; 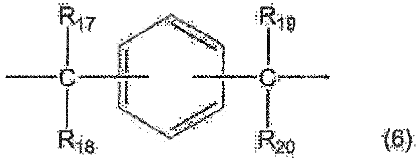
wherein
R₁₇ to R₂₀ each independently represent any one selected from the group consisting of a hydrogen atom, a halogen, an alkyl group having 1 to 20 carbon atoms optionally having a substituent, an alkoxy group having 1 to 5 carbon atoms optionally having a substituent, an aryl group having 6 to 12 carbon atoms optionally having a substituent, an alkenyl group having 2 to 5 carbon atoms optionally having a substituent, and an aralkyl group having 7 to 17 carbon atoms optionally having a substituent; or R₁₇ and R₁₈ are bonded to each other to form a carbocycle or a heterocycle having 1 to 20 carbon atoms, and R₁₉ and R₂₀ are bonded to each other to form a carbocycle or a heterocycle having 1 to 20 carbon atoms; and
the substituents are each independently a halogen atom, an alkyl group having 1 to 20 carbon atoms, or an aryl group having 6 to 12 carbon atoms; 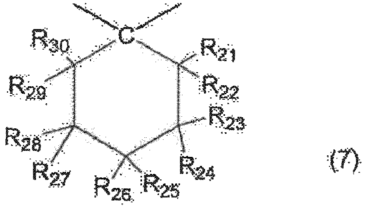
wherein
R₂₁ to R₃₀ each independently represent a hydrogen atom or an alkyl group having 1 to 3 carbon atoms; and
(B) an aromatic alcohol represented by Formula (2): 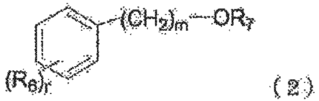 wherein
R₆ represents a linear alkyl group having 1 to 10 carbon atoms, a branched alkyl group having 3 to 10 carbon atoms, a cyclic alkyl group having 3 to 10 carbon atoms, a linear alkoxy group having 1 to 10 carbon atoms, a branched alkoxy group having 3 to 10 carbon atoms, a cyclic alkoxy group having 3 to 10 carbon atoms, a halogen atom, a phenyl group, or a phenylphenyl group;
R₇ represents a hydrogen atom, -R₈OH, or -(R₉)ₛH; wherein R₈ represents a linear alkylene group having 1 to 10 carbon atoms or a branched alkylene group having 3 to 10 carbon atoms; R₉ represents a linear alkylene oxy group having 1 to 10 carbon atoms or a branched alkylene oxy group having 3 to 10 carbon atoms; and s represents an integer of 1 to 5;
m represents an integer of 0 to 10;
r represents an integer of 0 to 5,
provided that when R₇ represents a hydrogen atom, m represents an integer of 1 to 10, wherein
the mass ratio of the constitutional unit derived from a (meth)acrylate represented by Formula (1) and the aromatic alcohol is 60:40 to 95:5.

11. A cured body prepared by curing the composition according to any one of claims 1 to 8.
